# EUROPÄISCHE PATENTSCHRIFT

(11) **EP 1 412 056 B1**
(45) Veröffentlichungstag und Bekanntmachung des Hinweises auf die Patenterteilung: **19.12.2007**
(21) Anmeldenummer: 02790182.6
(22) Anmeldetag: 19.07.2002
(51) Int. Cl.: B01D 53/14

(54) **VERFAHREN ZUR ENTFERNUNG SAURER GASE AUS EINEM GASSTROM**
METHOD FOR THE REMOVAL OF ACID GASES FROM A GAS FLOW
PROCEDE D'ELIMINATION DE GAZ ACIDES DANS UN COURANT GAZEUX

(30) Priorität: 20.07.2001 DE 10135370
(43) Veröffentlichungstag der Anmeldung: 28.04.2004
(73) Patentinhaber: BASF Aktiengesellschaft, 67056 Ludwigshafen (DE)
(72) Erfinder: ASPRION, Norbert, 68163 Mannheim (DE); GROSSMANN, Christoph, 67117 Limburgerhof (DE)
(74) Vertreter: Reitstötter - Kinzebach
(86) Internationale Anmeldenummer: PCT/EP2002/008092
(87) Internationale Veröffentlichungsnummer: WO 2003/009924

(56) Entgegenhaltungen:
- EP-A- 0 558 019
- EP-A- 0 879 631
- DE-A- 19 828 977
- US-A- 5 700 437

## Beschreibung

Die vorliegende Erfindung betrifft ein Verfahren zur Entfernung von sauren Gasen aus einem Gasstrom, bei dem ein die sauren Gase enthaltender Gasstrom in einem Absorptionsschritt in Kontakt mit einem Absorptionsmittel gebracht wird, wodurch ein an sauren Gasen verarmter Gasstrom und ein mit sauren Gasen beladenes Absorptionsmittel erhalten wird.

In zahlreichen Prozessen in der chemischen Industrie treten Gasströme auf, die Sauergase, wie z.B. CO₂, H₂S, SO₂, CS₂, HCN, COS oder Mercaptane als Verunreinigungen enthalten. Bei diesen Gasströmen kann es sich beispielsweise um Erdgas, Synthesegas aus Schweröl oder schweren Rückständen, Raffineriegas oder bei der partiellen Oxidation von organischen Materialien, wie beispielsweise Kohle oder Erdöl, entstehendes Reaktionsgas handeln. Bevor diese Gase transportiert oder weiterverarbeitet werden können, muss der Sauergasgehalt des Gases deutlich reduziert werden. CO₂ muss beispielsweise aus Erdgas entfernt werden, da eine hohe Konzentration von CO₂ den Brennwert des Gases reduziert. Außerdem kann CO₂ in Verbindung mit in den Gasströmen häufig mitgeführtem Wasser zu Korrosion an Leitungen und Armaturen führen.

Die Entfernung von Schwefelverbindungen aus diesen Gasströmen ist aus unterschiedlichen Gründen von besonderer Bedeutung. Beispielsweise muss der Gehalt an Schwefelverbindungen von Erdgas durch geeignete Aufbereitungsmaßnahmen unmittelbar an der Erdgasquelle reduziert werden, denn auch die Schwefelverbindungen bilden in dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Darüber hinaus sind zahlreiche Schwefelverbindungen bereits in niedrigen Konzentrationen übelriechend und, allen voran Schwefelwasserstoff, toxisch.

Es ist bekannt, die unerwünschten sauren Gasbestandteile aus den Gasen durch Gaswäsche mit wässrigen oder nichtwässrigen Gemischen organischer Lösungsmittel als Adsorptionsmittel zu entfernen. Dabei kommen sowohl physikalische als auch chemische Lösungsmittel zum Einsatz. Bekannte physikalische Lösungsmittel sind beispielsweise Cyclotetramethylensulfon (Sulfolan), N-Methylpyrrolidon und N-alkylierte Piperidone. Bei den chemischen Lösungsmitteln haben sich insbesondere die wässrigen Lösungen von primären, sekundären und tertiären aliphatischen Aminen bzw. Alkanolaminen wie Monoethanolamin (MEA), Diethanolamin (DEA), Monomethylethanolamin (MMEA), Diethylethanolamin (DEEA), Triethanolamin (TEA), Diisopropanolamin (DIPA) und Methyldiethanolamin (MDEA) technisch bewährt.

Tertiäre Alkanolamine reagieren nicht direkt mit CO₂, da das Amin voll substituiert ist. Vielmehr wird CO₂ in einer langsamen Reaktion mit dem tertiären Alkanolamin und mit Wasser zu Bicarbonat umgesetzt. Wegen der langsamen Reaktion des CO₂ muss bei der Gaswäsche der Waschprozess mit tertiären Alkanolaminlösungen mit einem hohen Flüssigkeits-/Gas-Verhältnis bei entsprechend hohem Lösungsmittelumlauf durchgeführt werden. Daher wurde versucht, die Absorptionsrate von Kohlendioxid in wässrigen Lösungen von tertiären Alkanolaminen durch Zugabe weiterer Verbindungen, die als Aktivatoren oder Promotoren bezeichnet werden, zu erhöhen.

Derartige Promotoren können primäre und sekundäre Amine sein. Ein bevorzugter Promotor ist Piperazin. Der Stickstoff der primären und sekundären Amine reagiert direkt mit Kohlendioxid unter Bildung von Carbamat. In der wässrigen Aminlösung steht das Carbamat mit Bicarbonat im Gleichgewicht. Zum Regenerieren der Aminlösung, bei dem Kohlendioxid und ggf. weitere absorbierte Sauergase durch Entspannen und Strippen mit Dampf entfernt werden, ist jedoch zum Zersetzen des Carbamats eine große Menge an Dampf und entsprechend viel Wärmeenergie erforderlich. Außerdem ist die Löslichkeit von Piperazin in wässriger Lösung gering.

Daher wurden primäre und sekundäre Amine, wie Piperazin, bisher stets in möglichst kleinen Mengen, d.h. in der Regel weniger als ein Mol/l Absorptionsmittel, verwendet. Beispielsweise gibt es zahlreiche Absorptionsmittel, die Methyldiethanolamin und Piperazin in Kombination in wässriger Lösung enthalten, wobei die Piperazin-Konzentration kleiner als 1 Mol/l Absorptionslösung ist (US 4,336,233; DE 25 51 717; US 4,551,158; US 4,553,984; US 4,537,753; US 4,999,031; CA 1,291,321; EP 202 600; EP-A 159 495; EP-A-190 434).

Absorptionsmittel mit höheren Gehalten an sekundärem Amin, wie Piperazin, werden in den folgenden Druckschriften offenbart:

EP-A-0 008 449 beschreibt die Reinigung von COS enthaltenden Gasen oder Flüssigkeiten durch Hydrolyse des COS mit Hilfe wässriger, N-heterocyclische Verbindungen enthaltender Lösungen. Als N-Heterocyclus können bis zu 75 Gew.-% Piperazin enthalten sein, außerdem zusätzlich bis zu 50 Gew.-% Methyldiethanolamin (MDEA).

WO 00/00271 offenbart ein Absorptionsmittel, das 0,1 bis 50 Gew.-% an Stickstoff-Heterocyclen, wie z.B. Piperazin, 1 bis 60 Gew.-% eines Alkohols, 0 bis 60 Gew.-% eines aliphatischen Alkanolamins, wie z.B. Methyldiethanolamin, 0 bis 98,9 Gew.-% Wasser und 0 bis 35 Gew.-% K₂CO₃ enthält. Das Absorptionsmittel hat eine hohe Absorptionsgeschwindigkeit und hohe Kapazität für saure Gasbestandteile. Das Absorptionsmittel ist besonders geeignet für zu reinigende Gase, die CO₂ in Mengen bis zu 75 Vol.-% und H₂S in Mengen bis zu 50 Vol.-% enthalten. Darüber hinaus können die zu reinigenden Gase COS, bevorzugt in Mengen bis zu 5 Vol.-%, CS₂, bevorzugt in Mengen bis zu 1 Vol.-%, und Mercaptane, bevorzugt Alkylmercaptane, in Mengen bis zu 1 Vol.-%, enthalten.

EP-A-0 879 631 offenbart ein Verfahren zur Entfernung von CO₂ aus Gasen, unter anderem mit wässrigen Lösungen eines sekundären Amins, z.B. Piperazin, und eines tertiären Amins, z.B. Methyldiethanolamin. Beide Amine können in Konzentrationen von jeweils 10 bis 45 Gew.-% eingesetzt werden, wobei die Gesamtkonzentration 70 Gew.-% nicht übersteigen soll. Die in den Beispielen gereinigten Gase enthalten 10 Mol-% CO₂.

EP-A-0 359 991 offenbart ein Verfahren zum Entfernen von CO₂ und ggf. H₂S aus Gasen unter Verwendung wässriger Absorptionslösungen mit tertiären Alkanolaminen, insbesondere Methyldiethanolamin. Bevorzugt kann außerdem ein sekundäres Amin wie Piperazin enthalten sein. Das tertiäre Amin ist in der Absorptionslösung bevorzugt in einer Menge von 20 bis 70 Gew.-%, das sekundäre Amin in einer Menge von 0,05 bis 3 Mol/l (0,4 bis 24,6 Gew.-%) vorhanden. Die zu reinigenden Gase sollen einen CO₂-Gehalt von 1 bis 90 Mol-%, besonders bevorzugt 3 bis 60 Mol-%, aufweisen. Neben CO₂ können die zu reinigenden Gase als weitere Sauergase H₂S enthalten, z.B. in Mengen von 1 Mol-ppm bis 50 Mol-%.

WO 00/66249 offenbart ein Absorptionsmittel und ein Verfahren zur Entfernung saurer Gase aus Gasströmen, die beispielsweise CO₂, H₂S, COS, SO₂, SO₃, CS₂, HCN, O₂ und Mercaptane enthalten können. Das Absorptionsmittel wird als geeignet betrachtet für Gase, die mit etwa 10 bis 10000 ppmv Mercaptanen, bis zu 90 Mol-% H₂S, bis zu 50 Mol-% CO₂, etwa 2 bis 10000 ppmv COS verunreinigt sind. Das Absorptionsmittel enthält mehr als 1 Mol-% Piperazin, bevorzugt mehr als 1,1 Mol-%, besonders bevorzugt mehr als 1,2 Mol-% Piperazin pro Liter wässrigem Absorptionsmittel, sowie 1,5 bis 6 Mol-% Methyldiethanolamin (MDEA) pro Liter wässrigem Absorptionsmittel. Das Absorptionsmittel soll gegenüber MDEA- und Piperazinhaltigen Absorptionsmitteln, die weniger als 1 Mol/l Piperazin enthalten, bei verringertem Absorptionsmittelumlauf und höherer Absorbertemperatur eine entsprechende CO₂-Entfernung aus dem verunreinigten Gas sowie ein verbessertes Verhalten bei der nachgeschalteten Regenerierung gewährleisten.

Die bekannten Absorptionsmittel, die Piperazin in einer Konzentration von mindestens 1 Mol/l Absorptionsmittel enthalten können, sind zur Behandlung von Gasen, die hohe Konzentrationen an Verunreinigungen durch saure Gase aufweisen, bestimmt. Beispielsweise liegen die sauren Gase bei der Erdgasreinigung im Allgemeinen mit einem Partialdruck im Bereich von 3 bis 7 bar vor (bei einem Gesamtdruck von etwa 50 bis 70 bar). Häufig müssen jedoch auch Gase gereinigt werden, die nur geringe Sauergas-Verunreinigungen aufweisen, d.h. der Partialdruck der sauren Gase in dem zu behandelnden Gas oder Gasgemisch ist gering. Bei sauren Gasen, die in nur geringen Konzentrationen vorhanden sind, wird bei der Extraktion unter üblichen Bedingungen eine nur geringe Gleichgewichtsbeladung des Absorptionsmittels erzielt. Zur Entfernung der sauren Gase ist daher die Anwendung relativ hoher Mengen an Absorptionsmittel erforderlich.

Aufgabe der vorliegenden Erfindung ist es daher, ein Verfahren zur Entfernung saurer Gase aus einem Gas oder Gasgemisch, das saure Gase in geringen Partialdrücken als Verunreinigungen aufweist, bereitzustellen, bei dem eine hohe Gleichgewichtsbeladung erzielt wird und das daher mit relativ geringen Mengen an Absorptionsmittel durchgeführt werden kann. "Geringe Partialdrücke" bedeutet, dass der Partialdruck aller zu entfernenden sauren Gase insgesamt 1500 mbar nicht übersteigt.

Erfindungsgemäß wurde gefunden, dass sich wässrige Absorptionsmittel, die ein tertiäres Alkanolamin und mindestens 8 Gew.-% Piperazin enthalten, insbesondere solche, die aus Wasser, Methyldiethanolamin (MDEA) und mehr als 8 Gew.-% Piperazin bestehen, besonders zur Entfernung geringfügiger Sauergas-Verunreinigungen eignen.

Gegenstand der vorliegenden Erfindung ist daher ein Verfahren zur Entfernung von sauren Gasen aus einem Gasstrom, bei dem ein die sauren Gase enthaltender Gasstrom, in dem die Summe der Partialdrücke der sauren Gase 1500 mbar nicht übersteigt, bei einem Gesamtdruck von 50 bis 70 bar in einem Absorptionsschritt mit einem wäßrigen Absorptionsmittel in Kontakt gebracht und ein Absorptionsmittel verwendet wird, das aus Wasser, mindestens einem tertiären Alkanolamin und Piperazin in einer Konzentration von 15 bis 40 Gew.-% des Absorptionsmittels besteht, wobei ein an sauren Gasen abgereicherter Gasstrom und ein mit sauren Gasen beladenes Absorptionsmittel erhalten wird.

Durch die vergleichsweise hohe Piperazin-Konzentration des Absorptionsmittels wird eine Erhöhung der Gleichgewichtsbeladung des Absorptionsmittels mit sauren Gasen, insbesondere CO₂ und H₂S, bewirkt. Dadurch kann die Lösungsmittel-Umlaufmenge verringert werden, was die Verwendung kürzerer Absorptionskolonnen erlaubt. Dieser Effekt ist überraschenderweise bei geringen Partialdrücken der Sauergas-Verunreinigungen, insbesondere CO₂ und H₂S, erheblich stärker ausgeprägt als bei höheren Partialdrücken der Sauergas-Verunreinigungen.

Das tertiäre Alkanolamin kann ein Alkyldialkanolamin, Dialkylmonoalkanolamin oder Trialkanolamin sein, wobei jede Alkylgruppe 1, 2, 3 oder 4 Kohlenstoffatome und jede Alkanolgruppe 2, 3 oder 4 Kohlenstoffatome aufweist. Beispiele für Alkanolamine sind Methyldiethanolamin, Ethyldiethanolamin, Dimethylethanolamin, Triethanolamin etc. Bevorzugt ist Methyldiethanolamin.

Das erfindungsgemäße Verfahren bzw. Absorptionsmittel ist zur Entfernung saurer Gase aus Gasströmen geeignet. Bei den sauren Gasen handelt es sich insbesondere um CO₂, H₂S, COS und Mercaptane. Außerdem können auch SO₃, CS₂ und HCN enthalten sein. Gase, welche die sauren Gase enthalten und vom Absorptionsmittel im Wesentlichen nicht absorbiert werden, sind insbesondere Erdgas, Synthesegas, Koksofengas, Rauchgas, Verbrennungsabgase, Deponiegas (landfill gases), Kohlevergasungsgas und Kreisgas. Die Gase können neben einem oder mehreren der genannten sauren Gase weitere inerte Gasbestandteile, die von dem Absorptionsmittel nicht in nennenswertem Maße absorbiert werden, enthalten. Beispiele sind leichtflüchtige Kohlenwasserstoffe, bevorzugt C₁-C₄-Kohlenwasserstoffe, wie Methan, sowie Stickstoff und Wasserstoff.

Das erfindungsgemäße Verfahren ist mit besonderem Vorteil zur Reinigung von Gasen mit einem Gesamt-Sauergaspartialdruck von bis zu 1000 mbar, insbesondere bis zu 500 mbar, anwendbar. Hier werden die Vorteile der hohen Piperazin-Konzentration besonders deutlich. Eine sinnvolle Reinigung ist bis zu einer Untergrenze der Summe der Partialdrücke der Sauergas-Verunreinigungen von etwa 1 mbar möglich.

In dem bei dem erfindungsgemäßen Verfahren verwendeten wässrigen Absorptionsmittel liegt die Gesamtaminkonzentration bei mindestens 20 Gew.-%, bevorzugt bei mindestens 25 Gew.-%, besonders bevorzugt bei mindestens 30 Gew.-% des Absorptionsmittels. Besonders bevorzugt liegt die Konzentration an Gesamtamin im Bereich von 20 bis 70 Gew.-%, insbesondere 20 bis 60 Gew.-% und besonders bevorzugt 20 bis 55 Gew.-% des Absorptionsmittels. Die Konzentration an Piperazin beträgt 15 bis 40 Gew.-%, und insbesondere 15 bis 25 Gew.-% des Absorptionsmittels.

Nachfolgend werden der prinzipielle Verfahrensablauf für eine Gaswäsche sowie mögliche Varianten, wie sie erfindungsgemäß durchgeführt werden können, beschrieben.

Der die sauren Gasbestandteile enthaltende Ausgangsgasstrom wird in einem Absorptionsschritt in einem Absorber in Kontakt mit dem Absorptionsmittel gebracht, wodurch die sauren Gasbestandteile zumindest teilweise ausgewaschen werden. Als Absorber fungiert vorzugsweise eine in üblichen Gaswäsche-Verfahren eingesetzte Waschvorrichtung. Geeignete Waschvorrichtungen sind beispielsweise Füllkörper-, Packungs- und Bodenkolonnen, Radialstromwäscher, Strahlwäscher, Venturiwäscher und Rotations-Sprühwäscher, bevorzugt Füllkörper-, Packungs- und Bodenkolonnen. Die Behandlung des Gasstroms erfolgt bevorzugt in einer Kolonne im Gegenstrom. Der Gasstrom wird dabei im Allgemeinen in den unteren Bereich und das Absorptionsmittel in den oberen Bereich der Kolonne eingespeist.

Die Temperatur des Absorptionsmittels beträgt im Absorptionsschritt im Allgemeinen von 40 bis 100 °C, bei Verwendung einer Kolonne beispielsweise 40 bis 70 °C am Kopf der Kolonne und 50 bis 100 °C am Boden der Kolonne. Der Gesamtdruck beträgt im Absorptionsschritt im Allgemeinen von 1 bis 120 bar. Es wird ein an sauren Gasbestandteilen verarmtes Produktgas (Reingas) und ein mit sauren Gasbestandteilen beladenes Absorptionsmittel erhalten.

Das Verfahren kann einen oder mehrere aufeinanderfolgende Absorptionsschritte umfassen. Vorzugsweise wird der Absorptionsschritt in einem Teilschritt durchgeführt, wobei das die sauren Gasbestandteile enthaltende Ausgangsgas (Rohgas) mit dem Absorptionsmittel in Berührung gebracht wird.

Aus dem mit den sauren Gasbestandteilen beladenen Absorptionsmittel können die sauren Gasbestandteile in einem Regenerationsschritt freigesetzt werden, wobei ein regeneriertes Absorptionsmittel erhalten wird. Im Regenerationsschritt wird ganz allgemein die Beladung des Absorptionsmittels verringert. Das erhaltene regenerierte Absorptionsmittel wird vorzugsweise anschließend in den Absorptionsschritt zurückgeführt.

Im Allgemeinen beinhaltet der Regenerationsschritt eine Druckentspannung des beladenen Absorptionsmittels von einem hohen Druck, wie er bei der Durchführung des Absorptionsschrittes herrscht, auf einen niedrigeren Druck, der typischerweise ca. 1,5 bar oberhalb des Partialdrucks der sauren Gasbestandteile im Absorptionsschritt liegt. Die Druckentspannung kann beispielsweise mittels eines Drosselventils und/oder einer Entspannungsturbine erfolgen.

Im Regenerationsschritt wird eine Strippung durchgeführt, wobei aus dem Absorptionsmittel die sauren Gasbestandteile freigesetzt werden. Das Strippen oder Ausstreifen kann in einer oder mehreren Stufen erfolgen. Das Strippen kann in einer mit Füllkörpern oder Packungen ausgestatteten Desorptionskolonne, in dem das Strippungsmittel dem Absorptionsmittel entgegenströmt, durchgeführt werden. Vorzugsweise beträgt der Druck beim Strippen 1 bis 3 bar absolut und die Temperatur 90 bis 130 °C, wobei mit heißem Gas oder Wasserdampf, bevorzugt mit Wasserdampf, gestrippt wird. Strippverfahren sind beispielsweise beschrieben in EP-A-0 159 495, EP-A-0 190 434, EP-A-0 359 991. Zum Ausgleich von Wasserverlusten durch in den abgezogenen Gasströmen enthaltenes Wasser kann Wasserdampf zugeführt werden, beispielsweise am Sumpf einer Entspannungsstufe, wie in EP-A-0 159 495 und US 4,551,158 (EP-A-0 121 109) beschrieben.

Die Erfindung wird nun durch Beispiele näher erläutert.

In den Zeichnungen zeigen:
- Figur 1: eine schematische Darstellung des Verfahrensablaufs einer Ausführungsform des erfindungsgemäßen Verfahrens,
- Figur 2: die relative CO₂-Gleichgewichtsbeladung, die erfindungsgemäß relativ zu einem Vergleichsbeispiel erhalten wurde,
- Figur 3: die relative H₂S-Gleichgewichtsbeladung, die erfindungsgemäß relativ zu einem Vergleichsbeispiel erhalten wurde.

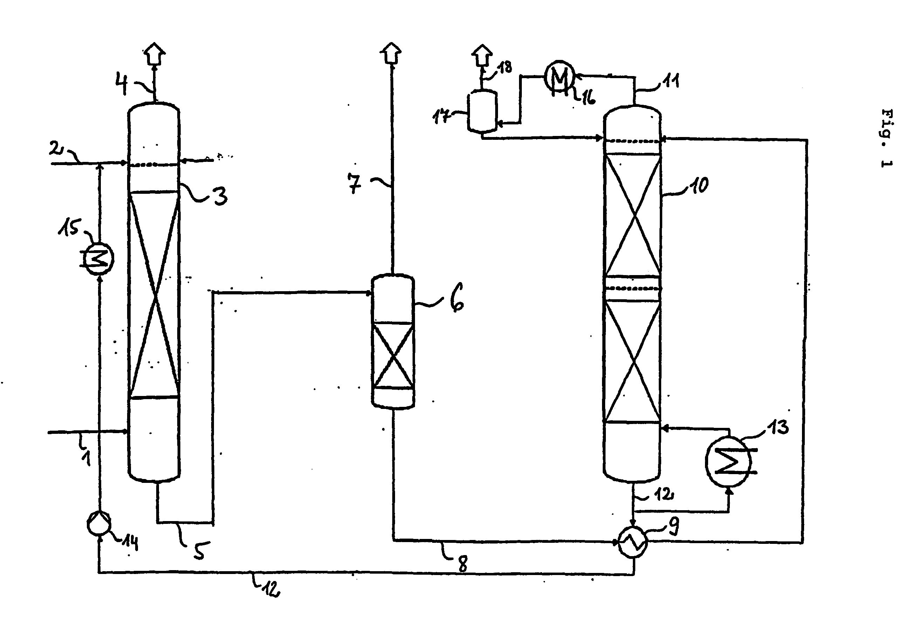

Figur 1 ist eine schematische Darstellung des Verfahrensablaufs einer Ausführungsform des erfindungsgemäßen Verfahrens. Über eine Zuleitung ***1*** wird ein an sauren Gasbestandteilen reiches Rohgas in den unteren Bereich eines als Kolonne ausgebildeten Absorbers ***3*** geleitet, der eine übliche Füllkörperpackung aufweist. Im Absorber ***3*** wird das Rohgas mit dem Absorptionsmittel, das über Leitung ***2*** in den oberen Bereich des Absorbers eingespeist wird, im Gegenstrom in Kontakt gebracht. Dabei erfolgt eine Auftrennung in einen an sauren Gasen abgereicherten Gasstrom (Reingas) und einen mit sauren Gasen angereicherten Absorptionsmittelstrom. Das Reingas wird am Kopf des Absorbers ***3*** über die Leitung ***4*** ausgeschleust und das beladene Absorptionsmittel verläßt den Absorber im unteren Bereich über Leitung ***5***.

Das beladene Absorptionsmittel wird in den oberen Bereich der Entspannungskolonne ***6*** eingeleitet, die im Allgemeinen bei einem Druck betrieben wird, der oberhalb des CO₂-Partialdrucks in dem dem Absorber zugeführten Rohgas liegt. Die Entspannung des Absorptionsmittel erfolgt im Allgemeinen mit Hilfe üblicher Vorrichtungen, beispielsweise eines Stand-Regel-Ventils, einer hydraulischen Turbine oder einer umgekehrt laufenden Pumpe. Bei der Entspannung wird der größte Teil der gelösten nicht-sauren Gase sowie ein kleiner Teil der sauren Gase freigesetzt. Diese Gase werden über die Leitung ***7*** aus der Entspannungskolonne 6 über Kopf ausgeschleust.

Das Absorptionsmittel, das nach wie vor mit dem Großteil der sauren Gase beladen ist, verläßt die Entspannungskolonne über Leitung ***8*** und wird im Wärmetauscher ***9*** aufgeheizt. Das aufgeheizte Absorptionsmittel wird in den oberen Bereich des Strippers ***10*** eingespeist, der mit zwei Packungen ausgestattet ist. Im Ventil ***9*** und im Stripper ***10*** erfolgt eine weitere Entspannung des Absorptionsmittels. Die Hauptmenge der sauren Gase wird mit Wasserdampf gestrippt und verläßt den Stripper ***10*** am Kopf über Leitung ***11*.** Das regenerierte Absorptionsmittel verläßt den Stripper ***10*** im Sumpf über Leitung ***12*,** wobei ein Teilstrom über den Reboiler ***13*** im Kreislauf geführt wird, um den für das Strippen erforderlichen Wasserdampf zu erzeugen. Das den Stripper ***10*** verlassende Absorptionsmittel wird über den Wärmetauscher ***9*** geführt, wobei das von der Entspannungskolonne ***6*** kommende, mit sauren Gasen angereicherte Absorptionsmittel aufgeheizt wird. Das regenerierte Absorptionsmittel kann über Leitung ***12*,** Förderpumpe ***14*** und nach Aufheizen mit Hilfe des Wärmetauschers ***15*** im Absorber ***3*** wiederverwendet werden. Die sauren Gase werden zusammen mit Wasserdampf am Kopf des Strippers ***10*** über Leitung ***11*** ausgeschleust und über den Kondensator ***16*** geführt, um den Wasserdampf zu kondensieren. Das Kondensat wird mit den sauren Gasen in den Trennbehälter ***17*** eingespeist, wobei die sauren Gase über die Leitung ***18*** ausgeschleust werden und soviel des Kondensats auf den Kopf des Strippers ***10*** zurückgeführt wird, dass die Wasserverluste ausgeglichen werden.

### Beispiel 1

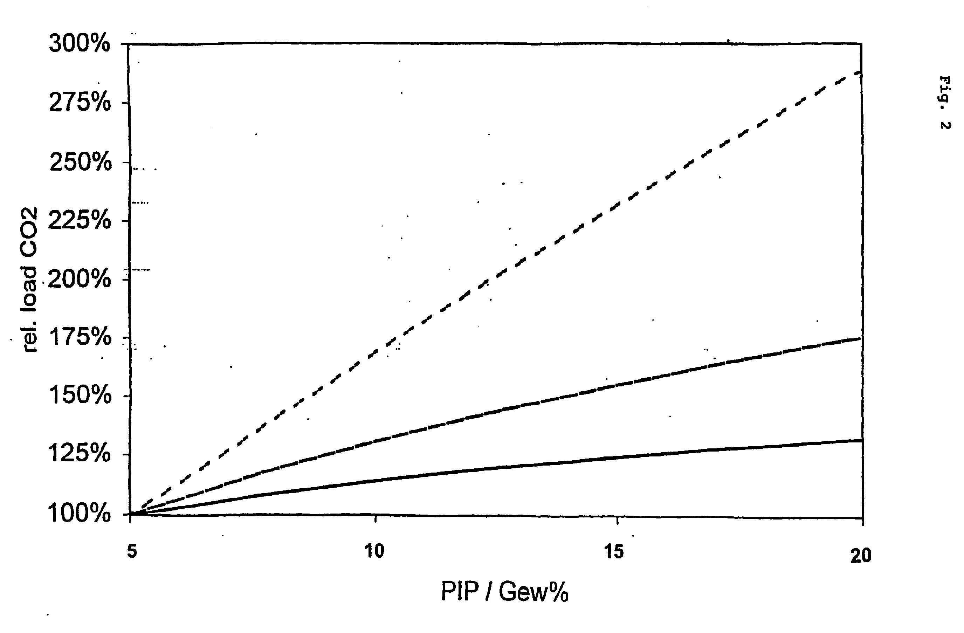

Es wurden Berechnungen mit einem Phasengleichgewichtsmodell (Pitzer-Modell; Kenneth S. Pitzer, Activity Coefficients in Electrolyte Solutions 2^{nd} Ed., CRC-Press, 1991, Chapt. 3, Ion Interaction Approach: Theory and Data Correlation; die Parameter des Modells wurden an Phasengleichgewichtsmessungen im System CO₂/H₂O/MDEA/Piperazin/H₂O angepasst) für drei unterschiedliche CO₂-Partialdrücke (70 mbar; 700 mbar; 3 bar) durchgeführt. Es wurde ein wässriges Absorptionsmittel zugrunde gelegt, das 60 Gew.-% Wasser und ein Gemisch aus MDEA und Piperazin enthält. Als Piperazin-Konzentration wurden 5, 10, 15 und 20 Gew.-% zugrunde gelegt (Rest: MDEA). Das Ergebnis ist in Figur 2 gezeigt (70 mbar: gepunktete Linie, 700 mbar: gestrichelte Linie, 3 bar: durchgezogene Linie). Die Gleichgewichtsbeladung wurde relativ zu dem Vergleichsabsorptionsmittel dargestellt, das 5 Gew.-% Piperazin, 35 Gew.-% MDEA und 60 Gew.-% Wasser enthält.

Es ist ersichtlich, dass mit dem erfindungsgemäßen Verfahren eine höhere Beladbarkeit mit CO₂ erzielt wird als mit dem Vergleichsabsorptionsmittel. Darüberhinaus zeigt die Figur 2, dass die relative Beladbarkeit mit sinkendem Partialdruck überraschenderweise immer größer wird. Beim niedrigsten Partialdruck und der höchsten Piperazinkonzentration beträgt die relative Beladung etwa den dreifachen Wert des Vergleichsbeispiels und mehr als das doppelte der Beladung, die erzielt wird, wenn der Partialdruck der sauren Gase 3 bar beträgt.

### Beispiel 2

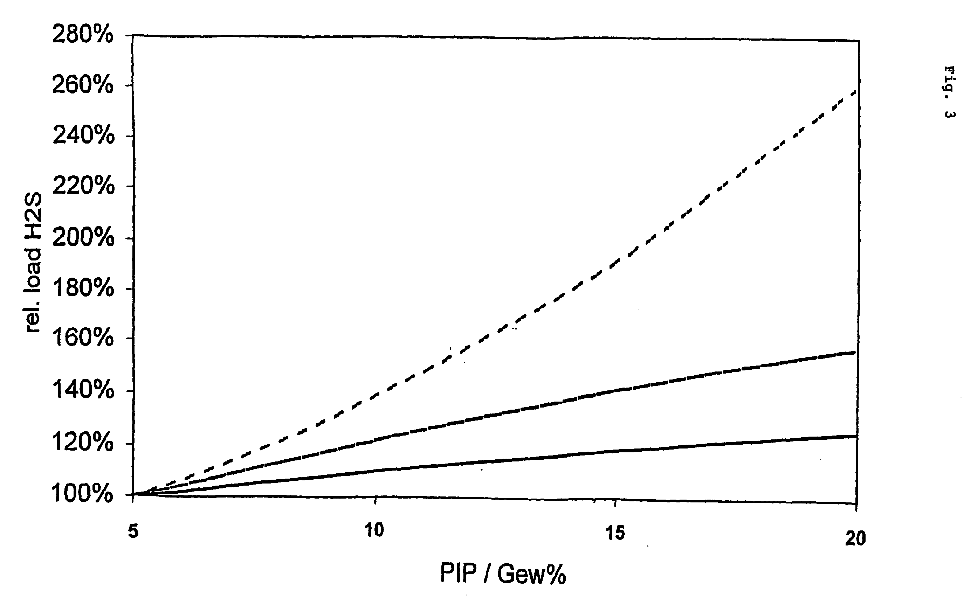

Die H₂S-Gleichgewichtsbeladung wurde analog zu Beispiel 1 bestimmt. Die Ergebnisse sind in der Figur 3 gezeigt (70 mbar: gepunktete Linie, 700 mbar: gestrichelte Linie, 3 bar: durchgezogene Linie).

Es ist ersichtlich, dass beim erfindungsgemäßen Verfahren im gesamten Bereich eine höhere relative Beladbarkeit mit H₂S erzielt wird. Diese erreicht bei der höchsten angegebenen Piperazin-Konzentration und dem niedrigsten H₂S-Partialdruck etwa den 2,6-fachen Wert des Vergleichsabsorptionsmittels. Außerdem ist ersichtlich, dass auch hier die relative Gleichgewichtsbeladung bei der höchsten Piperazin-Konzentration und dem niedrigsten Partialdruck mehr als doppelt so hoch ist im Vergleich zu einem H₂S-Partialdruck von 3 bar.

## Patentansprüche

1. Verfahren zur Entfernung von sauren Gasen aus einem Gasstrom, bei dem ein die sauren Gase enthaltender Gasstrom, in dem die Summe der Partialdrücke der sauren Gase 1500 mbar nicht übersteigt, bei einem Gesamtdruck von 50 bis 70 bar in einem Absorptionsschritt mit einem wäßrigen Absorptionsmittel in Kontakt gebracht und ein Absorptionsmittel verwendet wird, das aus Wasser, mindestens einem tertiären Alkanolamin und Piperazin in einer Konzentration von 15 bis 40 Gew.-% des Absorptionsmittels besteht, wobei ein an sauren Gasen abgereicherter Gasstrom und ein mit sauren Gasen beladenes Absorptionsmittel erhalten wird.

2. Verfahren nach Anspruch 1, **dadurch gekennzeichnet, dass** die Summe der Partialdrücke der sauren Gase in dem Gasstrom ≤1000 mbar, bevorzugt ≤500 mbar, ist.

3. Verfahren nach einem der Ansprüche 1 oder 2, **dadurch gekennzeichnet, dass** ein Absorptionsmittel verwendet wird, bei dem die Gesamtaminkonzentration im Bereich von 20 bis 70 Gew.-% des Absorptionsmittels liegt.

4. Verfahren nach Anspruch 3, **dadurch gekennzeichnet, dass** ein Absorptionsmittel verwendet wird, bei dem die Gesamtaminkonzentration im Bereich von 20 bis 55 Gew.-% des Absorptionsmittels liegt.

5. Verfahren nach einem der vorhergehenden Ansprüche, **dadurch gekennzeichnet, dass** ein Absorptionsmittel verwendet wird, bei dem die Piperazinkonzentration im Bereich von 15 bis 25 Gew.-% des Absorptionsmittels liegt.

6. Verfahren nach einem der vorhergehenden Ansprüche, **dadurch gekennzeichnet, dass** man als tertiäres Alkanolamin Methyldiethanolamin verwendet.

7. Verfahren nach einem der vorhergehenden Ansprüche, **dadurch gekennzeichnet, dass** ein Regenerationsschritt durchgeführt wird, in dem die sauren Gase aus dem beladenen Absorptionsmittel freigesetzt werden, wobei ein regeneriertes Absorptionsmittel erhalten wird, das gewünschtenfalls in den Absorptionsschritt zurückgeführt wird.

8. Verfahren nach Anspruch 7, **dadurch gekennzeichnet, dass** der Regenerationsschritt eine oder mehrere Entspannungsstufen umfasst.

9. Verfahren nach Anspruch 7 oder 8, **dadurch gekennzeichnet, dass** der Regenerationsschritt eine oder mehrere Abstreifstufen umfasst.

## Claims

1. A process for removing acid gases from a gas stream in which an acid-gas-containing gas stream in which the sum of the partial pressures of the acid gases does not exceed 1500 mbar is brought into contact with an aqueous absorbent in an absorption step at a total pressure of from 50 to 70 bar and an absorbent is used which consists of water, at least one tertiary alkanolamine and piperazine at a concentration from 15 to 40% by weight of the absorbent, an acid-gas-depleted gas stream and an acid-gas-loaded absorbent being obtained.

2. A process according to claim 1, wherein the sum of the partial pressures of the acid gases in the gas stream is ≤1000 mbar, preferably ≤500 mbar.

3. A process according to one of claims 1 or 2, wherein an absorbent is used in which the total amine concentration is in the range from 20 to 70% by weight of the absorbent.

4. A process according to claim 3, wherein an absorbent is used in which the total amine concentration is in the range from 20 to 55% by weight of the absorbent.

5. A process according to one of the preceding claims, wherein an absorbent is used in which the piperazine concentration is in the range from 15 to 25% by weight of the absorbent.

6. A process according to one of the preceding claims, wherein the tertiary alkanolamine used is methyldiethanolamine.

7. A process according to one of the preceding claims, wherein a regeneration step is carried out in which the acid gases are released from the loaded absorbent, a regenerated absorbent being obtained which if desired is recirculated to the absorption step.

8. A process according to claim 7, wherein the regeneration step comprises one or more expansion stages.

9. A process according to claim 7 or 8, wherein the regeneration step comprises one or more stripping stages.

## Revendications

1. Procédé d'élimination de gaz acides d'un courant de gaz, dans lequel un courant de gaz contenant les gaz acides, la somme des pressions partielles des gaz acides ne dépassant pas 1500 mbar, est amené en contact avec un absorbant aqueux dans une étape d'absorption à une pression totale de 50 à 70 bar, et dans lequel un absorbant, constitué d'eau, d'au moins une alcanolamine tertiaire et de pipérazine en une concentration de 15 à 40 % en poids de l'absorbant, est utilisé, un courant de gaz appauvri en gaz acides et un absorbant chargé de gaz acides étant obtenus.

2. Procédé selon la revendication 1, **caractérisé en ce que** la somme des pressions partielles des gaz acides dans le courant de gaz est ≤ 1000 mbar, de manière préférée ≤ 500 mbar.

3. Procédé selon la revendication 1 ou 2, **caractérisé en ce qu'**un absorbant est utilisé, dans lequel la concentration totale d'amine se situe dans la plage de 20 à 70 % en poids de l'absorbant.

4. Procédé selon la revendication 3, **caractérisé en ce qu'**un absorbant est utilisé, dans lequel la concentration totale d'amine se situe dans la plage de 20 à 55 % en poids de l'absorbant.

5. Procédé selon l'une quelconque des revendications précédentes, **caractérisé en ce qu'**un absorbant est utilisé, dans lequel la concentration de pipérazine se situe dans la plage de 15 à 25 % en poids de l'absorbant.

6. Procédé selon l'une quelconque des revendications précédentes, **caractérisé en ce que** de la méthyldiéthanolamine est utilisée en tant qu'alcanolamine tertiaire.

7. Procédé selon l'une quelconque des revendications précédentes, **caractérisé en ce qu'**une étape de régénération est mise en oeuvre, dans laquelle les gaz acides sont libérés de l'absorbant chargé, un absorbant régénéré, recyclé si on le souhaite dans l'étape d'absorption étant obtenu.

8. Procédé selon la revendication 7, **caractérisé en ce que** l'étape de régénération comporte une ou plusieurs phases de détente.

9. Procédé selon la revendication 7 ou 8, **caractérisé en ce que** l'étape de régénération comporte une ou plusieurs phases de stripage.
